# EUROPEAN PATENT SPECIFICATION

(11) **EP 2 444 265 B1**
(45) Date of publication and mention of the grant of the patent: **05.06.2013**
(21) Application number: 11192237.3
(22) Date of filing: 31.03.2010
(51) Int. Cl.: B60K 1/02, B60K 7/00, B60K 17/04, H02K 5/22

(54) **Electric transaxle unit**
Elektrische Getriebeeinheit
Unité de boîte-pont électrique

(30) Priority: 09.12.2009 US 634098
(43) Date of publication of application: 25.04.2012
(62) Divisional of application: 10158564.4
(73) Proprietor: Kanzaki Kokyukoki Mfg. Co., Ltd., Hyogo 661-0981 (JP)
(72) Inventor: Ishii, Norihiro c/o Kanzaki Kokyukoki Mfg. Co., Ltd., Amagasaki-shi, Hyogo 661-0981 (JP); Ebihara, Tomoyuki c/o Kanzaki Kokyukoki Mfg. Co., Ltd., Amagasaki-shi, Hyogo 661-0981 (JP); Sasahara, Kengo c/o Kanzaki Kokyukoki Mfg. Co., Ltd., Amagasaki-shi, Hyogo 661-0981 (JP); Itou, Masaya c/o Kanzaki Kokyukoki Mfg. Co., Ltd., Amagasaki-shi, Hyogo 661-0981 (JP)
(74) Representative: Jostarndt, Hans-Dieter

(56) References cited:
- DE-U1-202005 020 624
- US-A- 3 404 747

## Description

### BACKGROUND OF THE INVENTION

### Field of the Invention

The present invention relates to an electric transaxle unit including a casing incorporating an electric motor for driving an axle.

### Related Art

Recently, an electric transaxle unit having a casing, which incorporates an electric motor having variable output and supports an axle driven by the electric motor, is used for various vehicles or devices. In a typical electric transaxle unit, a motor shaft, serving as an output shaft of the electric motor, is disposed in the casing so as not to be coaxial to the axle, a deceleration gear train is disposed in the casing so as to be interposed between the motor shaft and the axle, and a brake is disposed in the casing so as to be adapted to brake any element in a power train ranging between the motor shaft and the axle via the deceleration gear train. A typical vehicle using the electric transaxle unit is a hybrid car. The electric transaxle unit is also adaptable to an electric wheelchair and various working vehicles such as a lawn mower and a skid steering loader.

DE 20 2005 020 624 U1 describes an electric transaxle unit according to the preamble of claim 1, which comprises electronic parts installed on the outer side of casing.

The electric transaxle unit is desired so that its components can be simply assembled, and the assembled components are firmly settled. Further, in consideration that the electric transaxle unit has an indispensable electric wire connected to the electric motor in the casing and extended outward from the casing, the casing is desired to be sealed surely and simply during assembling of the electric transaxle unit.

### SUMMARY OF THE INVENTION

An electric transaxle unit is provided as defined by the features of claim 1 according to the invention comprising a casing, an axle, an electric motor assembly, a motor shaft, and a deceleration gear train. A casing defines a motor chamber and a gear chamber therein. An axle is supported by a casing. An electric motor assembly is disposed in a motor chamber. A motor shaft is disposed in the motor chamber so as to serve as an output shaft of an electric motor assembly. A motor shaft has opposite first and second ends. The first end of the motor shaft is extended from the motor chamber into the gear chamber. A deceleration gear train is disposed in the gear chamber so as to transmit power from the first end of a motor shaft to an axle. An electric transaxle unit is characterized in that a wire-gathering box for an electric motor assembly is provided on an outer surface of a casing, the second end of a motor shaft is extended from a motor chamber to the outside of a casing through the wire-gathering box, and a cooling fan is provided on the second end of a motor shaft.

Therefore, the casing does not need to have a hole for passage of a harness or a seal to be fitted in the hole.

In an electric transaxle unit, a motor shaft and an axle have respective horizontal axes. A casing includes a first casing part defining a motor chamber therein and includes a second casing part defining a gear chamber therein. The first and a second casing part have respective vertical surfaces joined to each other. A first end of a motor shaft is extended from the motor chamber into the gear chamber through the vertical surfaces of the first and second casing parts joined to each other.

Further, a second casing part includes third and fourth casing parts having respective vertical surfaces joined to each other.

### BRIEF DESCRIPTION OF THE DRAWINGS

Fig. 1 is a sectional plan view of an alternative electric transaxle unit C having a casing 300 dividable into left, right and middle casing parts by vertical surfaces.

Fig. 2 is a sectional plan view of a portion of electric transaxle unit C where a motor shaft supporter is engaged with the middle casing part via a dowel pin.

Fig. 3 is a cross sectional view taken along Y-Y ling of Fig. 1.

Fig. 4 is a cross sectional view taken along Z-Z line of Fig. 3.

Fig. 5 is a cross sectional view of a mower unit MU

### DETAILED DESCRIPTION OF THE INVENTION

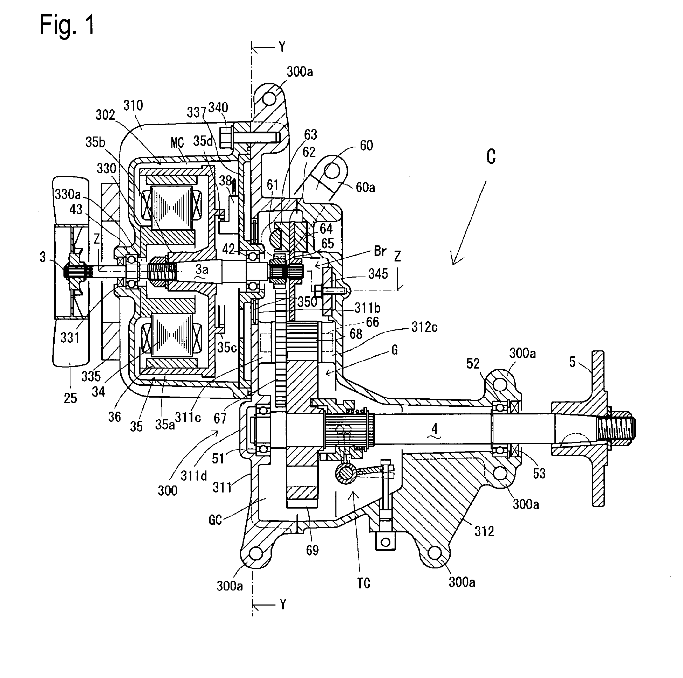

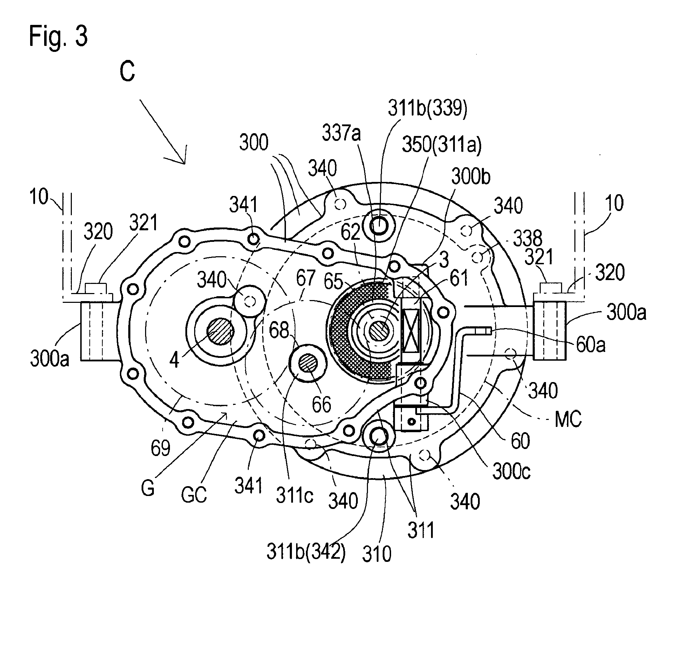

An electric transaxle unit C will be described with reference to Figs. 1 to 4. Electric transaxle unit C includes a casing 300. An axle 4 projects laterally outward from casing 300. Casing 300 has later-discussed divisional casing parts 310, 311, and 312, and bosses 300a having vertical penetrating bolt holes are formed on casing parts 310, 311, and 312 so as to serve as portions to be attached to a vehicle body frame 10. In this regard, vehicle body frame 10 has tabs 320 to be fitted onto top surfaces of bosses 300a, and tabs 320 are fastened to casing 300 by screwing respective bolts 321 into respective boss holes of bosses 300a, as shown in Fig. 3.

On the assumption that axle 4 supported by casing 300 is disposed on a horizontal phantom surface, casing 300 is shaped so as to have the horizontal phantom surface equidistant from top and bottom ends of bosses 300a. Therefore, when a pair of electric transaxle units C are arranged so that one corresponds to the other vertically inversed, thereby serving as left and right electric transaxle units C, the top surfaces of bosses 300a of respective left and right electric transaxle units C are disposed at equal heights so as to be convenient to their fitting to tabs 320 of vehicle body frame 10. Thus, casing 300 can be vertically inversed so as to selectively serve as either casing 300 of left electric transaxle unit C from which axle 4 projects leftwardly outward or casing 300 of right electric transaxle unit C from which axle 4 projects rightwardly outward. Further, an axis of a motor shaft 3 is disposed on the horizontal phantom surface.

Casing 300 is not dividable into upper and lower divisional parts by a horizontal surface, however, it is dividable into left, middle and right divisional casing parts 310, 311 and 312 by vertical surfaces. Axle supporting casing part 312 is joined at a left or right vertical open surface to a vertical open surface of middle casing part 311, and casing parts 311 and 312 are fastened to each other by bolts 341 shown in Fig. 3, thereby constituting a gear chamber GC therein. Motor casing part 310 forming a motor chamber MC therein is joined at a vertical open surface to a right or left vertical surface of middle casing part 311 laterally opposite to axle supporting casing part 312 with respect to middle casing part 311, and is fastened to middle casing part 311 by bolts 340 as shown in Figs. 1 and 3.

A structure of an electric motor assembly 302, installation of electric motor assembly 302 into motor casing part 310, and attachment of motor casing part 310 incorporating electric motor assembly 302 to middle casing part 311 will be described with reference to Figs. 1 to 4. Electric motor assembly 302 includes motor shaft 3, a drum-shaped rotor 35 fixed on motor shaft 3, and permanent magnets 36 fixed on the inner peripheral surface of the outer peripheral portion of rotor 35. Electric motor assembly 302 includes a cup-shaped stator 330 disposed coaxially to motor shaft 3. Armature windings 34 are fixed on an outer peripheral surface of stator 330 so as to face permanent magnets 36 of rotor 35 therearound. Stator 330 is fixed to an inside portion of a vertical wall of motor casing part 310 at an axial end thereof opposite to gear chamber GC.

A central boss 35b of rotor 35 fixed on motor shaft 3 is disposed in cup-shaped stator 330, and a vertical end surface of stator 330, laterally opposite to the projection direction of axle 4 outward from casing 300, is fixed to an inside surface of a vertical wall of motor casing part 310. A central hole 330a is provided in the vertical surface of stator 330, and motor shaft 3 projecting outward from central boss 35b of rotor 35 is passed through central hole 330a of stator 330. Bearing 43 and a fluid seal 331 are fitted in the vertical wall of motor casing part 310 so as to neighbor central hole 330a of stator 330. Motor shaft 3 passed through hole 330a is passed through bearing 43 and fluid seal 331. A wire-gathering box 335 is fixed onto an outer surface of the vertical wall of motor casing part 310. An outer end portion of motor shaft 3 passed through fluid seal 331 is freely rotatably passed through wire-gathering box 335, and a cooling fan 25 is fixed on an outer end of motor shaft 3.

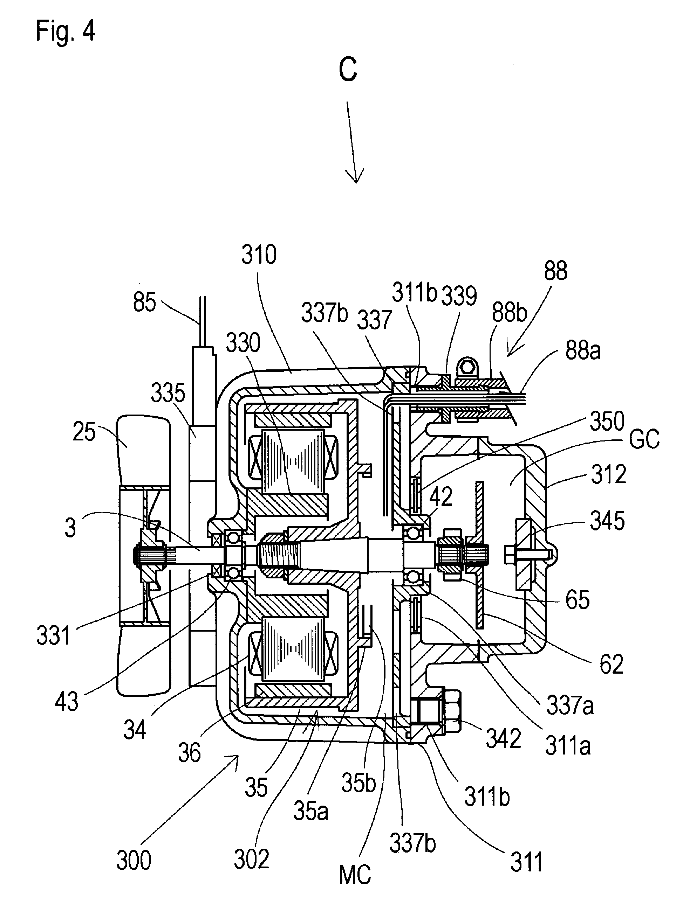

A harness 85, which is electrically connected to armature windings 34, is connected to wire-gathering box 335 exposed on motor casing part 310 of casing 300, as shown in Fig. 4. Therefore, casing 300 does not need to have a hole for passage of harness 85 or a seal to be fitted in the hole.

To detect a rotation angle of rotor 35 (i.e., motor shaft 3), electric motor assembly 302 is provided with an annular convex 35c formed on a cup-shaped portion 35a of rotor 35, a detected member 35d provided on the inner peripheral surface of annular convex 35c of rotor 35, and a rotation angle detector 38 for detecting a rotational position of detected member 35d. Rotation angle detector 38 is fixed to a motor shaft support frame 337. Motor shaft support frame 337 is not fixed to stator 330 similar to motor shaft support frame 37, but it is disposed along middle casing part 311 and is fixedly clamped between casing parts 310 and 311. A harness 88 connected to rotation angle detector 38 is passed through motor shaft support frame 337 and middle casing part 311 as discussed later with reference to Fig. 4.

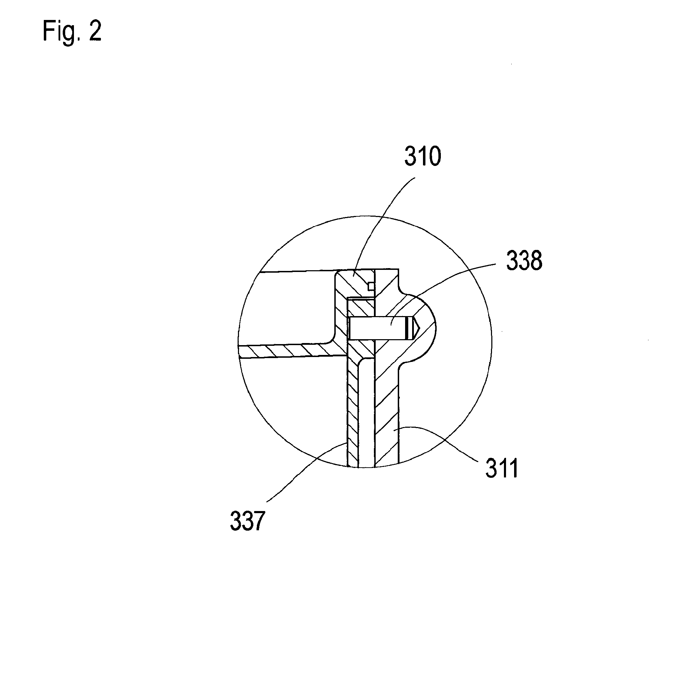

Motor shaft support frame 337 has a central boss 337a in which a bearing 42 is fitted. Motor shaft support frame 337 with bearing 42 is fitted and retained on middle casing part 311 by a doweling pin or doweling pins 338 as shown in Figs. 2 and 3, before attachment of installation of motor casing part 310 to middle casing part 311 while motor casing part 310 incorporating electric motor assembly 302 as an assembly of motor shaft 3, stator 330 and rotor 330. In this state, a ring-shaped net serving as a fluid filter 350 is fitted between an outer peripheral surface of central boss 337a and an inner peripheral surface of a circular hole 311a of middle casing part 311 surrounding central boss 337a. Rotation angle detector 38 is fixed on motor shaft support frame 337.

As shown in Figs. 3 and 4, a pair of upper and lower holes 337b of motor shaft support frame 337 coincide to a pair of upper and lower holes 311b of middle casing part 311, respectively. Either the pair of coinciding upper holes 337b and 311b or the pair of coinciding lower holes 337b and 311b are selected (in this embodiment, upper holes 337b and 311b are selected), and electric wires 88a of harness 88 are passed through selected coinciding holes 337b and 311b so as to be connected to rotation angle detector 38. A pipe joint 339 is fitted into selected hole 311b (in this embodiment, upper hole 311b) of middle casing part 311, and projects at an outer end thereof outward from middle casing part 311. A protection pipe 88b surrounding electric wires 88a of harness 88 is connected at an end thereof to the outer end of pipe joint 339. The remaining hole 311b (in this embodiment, lower hole 311b) is closed by a plug 342 screwed therein.

Then, an outer peripheral edge portion of motor casing part 310 surrounding a vertical opening is fitted onto a vertical surface of middle casing part 311 while an annular step formed on the outer peripheral edge portion of motor casing part 310 is fitted to the outer peripheral edge of motor shaft support frame 337. During access of motor casing part 310 to middle casing part 311, motor shaft 3 is passed through bearing 42 in motor shaft support frame 337, and detected member 35d fixed on rotor 35 is disposed to face rotation angle detector 38 fixed on middle casing part 311. In this way, the outer peripheral edge of motor shaft support frame 337 comes to be clamped between the outer peripheral edge portion of motor casing part 310 and the vertical surface of middle casing part 311, and the outer peripheral portion of motor casing part 310 is fastened to middle casing part 311 by bolts 340 so as to complete attachment of motor casing part 310 incorporating electric motor assembly 302 to middle casing part 311, whereby casing 300 is provided therein with motor chamber MC incorporating electric motor assembly 302.

Before motor casing part 310 incorporating electric motor assembly 302 is completely attached to middle casing part 311, axle-supporting casing part 312 is not attached to middle casing part 311, i.e., gear chamber CG is uncompleted, and the vertical side surface of middle casing part 311 laterally opposite to motor casing part 311 has a wide opening. After the completion of attachment of motor casing part 310 to middle casing part 311, the output end portion of motor shaft 3 projects outward from bearing 42 in motor shaft support frame 337 so as to enter the cavity of middle casing part 311. Then, a motor output gear 65 and a brake rotor 62 are fitted onto the projecting output end portion of motor shaft 3, and other components of a brake mechanism Br and a deceleration gear train G are installed into the cavity of middle casing part 311.

To constitute brake mechanism Br, middle casing part 311 is formed vertically opposite upper and lower bosses 300b and 300c for supporting vertical brake shaft 61 therein, as shown in Fig. 3. Boss 300b is closed outward so as not to have the end of brake shaft 61 projecting outward therefrom, and boss 300c is vertically penetrated so as to be opened outward. Boss 300b is disposed above or below boss 300c depending on whether electric transaxle unit C serves as a left unit or a right unit corresponding to the vertically inversed left unit. A cranked brake arm 60 is fixed on the end of vertical brake shaft 61 projecting outward from boss 300c so as to have a connection end 60a, which is constantly disposed at the same height as the axis of axle 4 regardless of whether boss 300c is above or below boss 300b (in this embodiment, boss 300c serves as the lower boss below boss 300b). Operable end 60a is connected to a link member, such as a wire or a rod, extended from a braking operation device provided in a vehicle so as to be mechanically connected to the braking operation device, or is connected to an active portion of an electric actuator (not shown) so as to be electrically connected to the braking operation device.

To constitute deceleration gear train G, each of axial opposite ends of a counter shaft 66 is not clamped between divisional casing parts but it is fitted into each of circularly shaped bosses 311c and 312c of respective casing parts 311 and 312. Before axle-supporting casing part 312 is attached to middle casing part 311, only one end of counter shaft 66 is fitted into boss 311c of middle casing part 311, and gears 67 and 68 are fitted on counter shaft 66. Further, a bearing 51 for journaling an end of axle 4 is fitted in a boss 311d formed in middle casing part 311 before attachment of axle-supporting casing part 312 to middle casing part 311.

On the other hand, before axle-supporting casing part 312 is attached to middle casing part 311, axle 4 is supported by axle-supporting casing part 312 via a bearing 52 and a fluid seal 53, and is provided thereon with a final gear 69 and a clutch TC for towing the vehicle, and a discoid magnet 345 for trapping metal powder caused by rubbing of gears is fastened to a wall of axle-supporting casing part 312 by a bolt. When axle-supporting casing part 312 is attached to middle casing part 311, the projecting end of counter shaft 66 is fitted into boss 312c, and an end of axle 4 is fitted into bearing 51, and brake pad 64 is disposed between brake rotor 62 and a wall of axle-supporting casing part 312. Finally, axle-supporting casing part 312 is fastened to middle casing part 311 by bolts 341, thereby completing electric transaxle unit C.

Electric transaxle unit C is adaptable to a riding lawn mower having a mid-mounted mower unit, a riding lawn mower having a front-mounted mower unit, a wheelchair, and various industrial vehicles such as a skid steering loader.

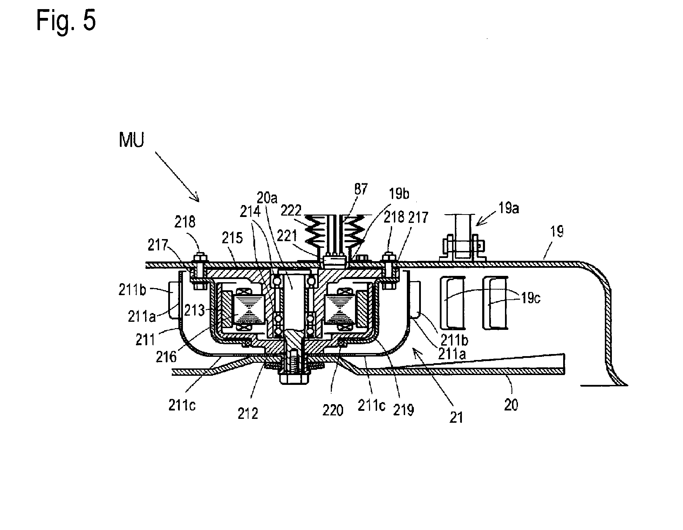

The lawn mower equipped with right and left electric transaxle units C is further equipped with a mower unit MU. Here, description will now be given of mower unit MU including a mower deck 19, blades 20 and motor assemblies 21 with reference to Fig. 5. Mower deck 19 incorporates blades 20, and is vertically movably supported below vehicle body frame 10 via a suspension link 19a such as show in Fig. 5. Each blade 20 has a vertical drive shaft 20a at a center axis thereof, and is provided on drive shaft 20a with a motor assembly 21 serving as an electric motor for controlling driving of corresponding blade 20. The lawn mower is equipped with an unshown mower driving on/off setting operation device (such as a switch or a lever) for selecting either driving or non-driving of blades 20.

As shown in Fig. 5, motor assembly 21 includes a rotor 212 and a stator 215. Rotor 212 is fixed on drive shaft 20a rotatably integrally with drive shaft 20a. Stator 215 is fitted on drive shaft 20a via bearings 214 rotatably relative to drive shaft 20a. An upwardly opened cup-shaped rotor 212 is fixed onto drive shaft 20a at a center bottom portion thereof, and is extended vertically upward from the center bottom portion thereof so as to have permanent magnets 213 fixed on an inner peripheral surface thereof. Armature windings 216 are fixed onto an outer peripheral surface of a vertical core portion thereof fitted around drive shaft 20a via bearings 214 so as to face permanent magnets 213. In this way, motor assembly 21 is flattened to have a vertical axial length and a horizontal diametric width that is larger than the vertical axial length, and is disposed within mower deck 19, whereby a top portion of mower deck 19 is formed as a horizontal flat plate-shaped portion without an upper portion of motor assembly 21 projecting therefrom. Therefore, the limit position of mower unit MU when raised can be heightened without interfering with the vehicle body of the lawn mower.

A top portion of stator 215 is expanded in a horizontal discoid shape, and is vibro-isolatedly secured to the horizontal top plate portion of mower deck 19 together with a rotor support frame 219 via vibro-isolating rubbers 217 and bolts-and-nuts 218. An opening 19b is opened in the horizontal discoid top portion of mower deck 19 so as to face a top surface of stator 212. A wire-collection box 221 is fixed on the top surface of stator 215 and is disposed in opening 19b, and harness 87 is extended upward from wire-collection box 221. A bellow 222 is extended upward from the horizontal top plate portion of mower deck 19 so as to cover opening 19b, wire-collection box 221 and harness 87.

Rotor support frame 219 is extended downward from a top portion thereof fastened to mower deck 19 via vibro-isolated rubbers 217 and bolts-and-nuts 218 so as to journal the bottom portion of rotor 212 via a bearing 220 at a bottom portion thereof. An upwardly opened cup-shaped protector 211 is fixed at a center bottom portion thereof onto drive shaft 20a between the center bottom portion of rotor 212 and the center portion of blade 20. In this way, stator 215 and rotor support frame 219 are secured to mower deck 19, and meanwhile, rotor 212, protector 211, blade 20 and drive shaft 20a are rotatable integrally with one another, and are rotatable relative to stator 215 and rotor support frame.

Mower deck 19 is formed with vent holes 19c in a vertical plate-shaped portion thereof so as to introduce the outside air thereinto. Protector 211 is formed with air suction holes 211a in a peripheral vertical plate-like portion thereof, with fan blades 211b projecting from respective air suction holes 211a, and with air discharge holes 211c in a horizontal bottom plate-like portion thereof. Therefore, protector 211 rotates together with blade 20 so as to introduce air into mower deck 19 via vent holes 19c, and thereinto via air suction holes 211a, to blow the air onto motor assembly 21, and to discharge the air outward therefrom via air discharge holes 211b. In Fig. 5, arrows define this flow of air. In this way, protector 211 protects mower assembly 21 from grass mowed by blade 20 as a main function thereof, and also serves as a cooling fan for motor assembly 21.

Mower unit MU illustrated in the present application is provided with motor assemblies 21 provided on drive shafts 20a of respective blades 20. Alternatively, one of blades 20 may serve as a drive blade 20 provided with motor assembly 21 on drive shaft 20a thereof, and drive shafts 20a of the other blades 20 may be drivingly connected to drive shaft 20a of drive blade 20 via a belt or the like.

## Claims

1. An electric transaxle unit (C) comprising:
a casing (300) defining a motor chamber (MC) and a gear chamber (GC) therein;
an axle (4) supported by the casing (300);
an electric motor assembly (302) disposed in the motor chamber (MC);
a motor shaft (3) disposed in the motor chamber (MC) so as to serve as an output shaft of the electric motor assembly (302), wherein the motor shaft (3) has opposite first and second ends, and wherein the first end of the motor shaft (3) is extended from the motor chamber (MC) into the gear chamber (GC); and
a deceleration gear train (G) disposed in the gear chamber (GC) so as to transmit
power from the motor shaft (3) to the axle (4),
**characterized in that** a wire-gathering box (335) for the electric motor assembly (302) is provided on an outer surface of the casing (300), the second end of the motor shaft (3) is extended from the motor chamber (MC) to the outside of the casing (300) through the wire-gathering box (335), and a cooling fan (25) is provided on the second end of the motor shaft (3).

2. The electric transaxle unit (C) according to claim 1,
wherein the motor shaft (3) and the axle (4) have respective horizontal axes, wherein the casing (300) includes a first casing part (310) defining the motor chamber (MC) therein and includes a second casing part (311, 312) defining the gear chamber (GC) therein,
wherein the first and second casing parts (310, 311, 312) have respective vertical surfaces joined to each other,
wherein the first end of the motor shaft (3) is extended from the motor chamber (MC) into the gear chamber (GC) through the vertical surfaces of the first and second casing parts (310, 311, 312) joined to each other.

3. The electric transaxle unit (C) according to claim 2,
wherein the second casing part (311, 312) includes third and fourth casing parts (311, 312) having respective vertical surfaces joined to each other.

## Patentansprüche

1. Elektrische Getriebeeinheit (C), umfassend:
ein Gehäuse (300), welches einen darin befindlichen Motorraum (MC) und einen darin befindlichen Getrieberaum (GC) festlegt,
eine Achse (4), die von dem Gehäuse (300) getragen ist,
eine Elektromotoreinrichtung (302), welche in dem Motorraum (MC) angeordnet ist,
eine Motorwelle (3), die so in dem Motorraum (MC) angeordnet ist, dass sie als Abtriebswelle der Elektromotoreinrichtung (302) dient, wobei die Motorwelle (3) ein erstes und ein zweites Ende aufweist, die sich gegenüberliegen, und wobei das erste Ende der Motorwelle (3) von dem Motorraum (MC) in den Getrieberaum (GC) verläuft, und
einen Bremsgetriebezug (G), welcher in dem Getrieberaum (GC) angeordnet ist,
um Antriebskraft von der Motorwelle (3) zu der Achse (4) zu übertragen,
**dadurch gekennzeichnet, dass** ein Kabelsammelkasten (335) für die Elektromotoreinrichtung (302) auf einer Außenfläche des Gehäuses (300) vorgesehen ist, das zweite Ende der Motorwelle (3) von dem Motorraum (MC) auf die Außenseite des Gehäuses (300) durch den Kabelsammelkasten (335) verläuft und ein Kühlgebläse (25) an dem zweiten Ende der Motorwelle (3) vorgesehen ist.

2. Elektrische Getriebeeinheit (C) nach Anspruch 1,
wobei die Motorwelle (3) und die Achse (4) jeweils horizontale Achsen aufweisen, wobei das Gehäuse (300) einen ersten Gehäuseteil (310) enthält, der den darin befindlichen Motorraum (MC) festlegt, und einen zweiten Gehäuseteil (311, 312) enthält, der den darin befindlichen Getrieberaum (GC) festlegt,
wobei der erste und der zweite Gehäuseteil (310, 311, 312) jeweils senkrechte Flächen aufweisen, die miteinander verbunden sind,
wobei das erste Ende der Motorwelle (3) von dem Motorraum (MC) in den Getrieberaum (GC) durch die miteinander verbundenen senkrechten Flächen des ersten und des zweiten Gehäuseteils (310, 311, 312) verläuft.

3. Elektrische Getriebeeinheit (C) nach Anspruch 2,
wobei der zweite Gehäuseteil (311, 312) einen dritten und einen vierten Gehäuseteil (311, 312) enthält, die jeweils senkrechte Flächen aufweisen, die miteinander verbunden sind.

## Revendications

1. Module de boîte-pont électrique (C) comprenant :
un carter (300) définissant une chambre de moteur (MC) et une chambre d'engrenage (GC) en son sein ;
un essieu (4) supporté par le carter (300) ;
un ensemble de moteur électrique (302) disposé dans la chambre de moteur (MC) ;
un arbre de moteur (3) disposé dans la chambre de moteur (MC) de manière à servir d'arbre de sortie de l'ensemble de moteur électrique (302), dans lequel l'arbre de moteur (3) a des première et seconde extrémités opposées, et dans lequel la première extrémité de l'arbre de moteur (3) est étendue de la chambre de moteur (MC) dans la chambre d'engrenage (GC) ; et
un train d'engrenages de décélération (G) disposé dans la chambre d'engrenage (GC) de manière à transmettre de la puissance de l'arbre de moteur (3) à l'essieu (4),
**caractérisé en ce qu'**une boîte de rassemblement de câbles (335) pour l'ensemble de moteur électrique (302) est prévue sur une surface externe du carter (300), la seconde extrémité de l'arbre de moteur (3) est étendue de la chambre de moteur (MC) à l'extérieur du carter (300) à travers la boîte de rassemblement de câbles (335) et un ventilateur de refroidissement (25) est prévue sur la seconde extrémité de l'arbre de moteur (3).

2. Module de boîte-pont électrique (C) selon la revendication 1,
dans lequel l'arbre de moteur (3) et l'essieu (4) ont des axes horizontaux respectifs, dans lequel le carter (300) inclut une première partie de carter (310) définissant la chambre de moteur (MC) en son sein et inclut une deuxième partie de carter (311, 312) définissant la chambre d'engrenage (GC) en son sein,
dans lequel les première et deuxième parties de carter (310, 311, 312) ont des surfaces verticales respectives reliées l'une à l'autre,
dans lequel la première extrémité de l'arbre de moteur (3) est étendue de la chambre de moteur (MC) dans la chambre d'engrenage (GC) à travers les surfaces verticales des première et deuxième parties de carter (310, 311, 312) reliées l'une à l'autre.

3. Module de boîte-pont électrique (C) selon la revendication 2,
dans lequel la deuxième partie de carter (311, 312) inclut des troisième et quatrième parties de carter (311, 312) ayant des surfaces verticales respectives reliées l'une à l'autre.
